# EUROPEAN PATENT SPECIFICATION

(11) **EP 0 569 118 B1**
(45) Date of publication and mention of the grant of the patent: **18.08.1999**
(21) Application number: 93301593.5
(22) Date of filing: 03.03.1993
(51) Int. Cl.: C06B 31/30, C06B 45/32, C06B 47/00

(54) **Hardened porous ammonium nitrate**
Gehärtetes, poröses Ammoniumnitrat
Nitrate d'ammonium poreux et durci

(30) Priority: 04.05.1992 US 878720
(43) Date of publication of application: 10.11.1993
(73) Proprietor: Orica Explosives Technology Pty Ltd, Melbourne, VIC 3000 (AU)
(72) Inventor: Chattopadhyay, Arun Kumar, Brossard, Quebec J4Z 3E6 (CA)
(74) Representative: Ede, Eric

(56) References cited:
- WO-A-89/03811
- WO-A-92/17422
- AU-A- 433 266
- DE-B- 1 234 195
- FR-A- 2 190 774
- FR-A- 2 645 144
- NL-A- 6 911 452
- US-A- 4 701 204
- US-A- 4 701 227
- US-A- 4 801 498

## Description

### BACKGROUND

The present invention is directed to hardening ammonium nitrate prills and granules without affecting other important physical properties.

A problem in the ammonium nitrate art is the competing need for porosity versus the need for hardness. This is especially true for prills or granules that are used for explosive applications. Ammonium nitrate may be used for other applications such as fertilizers, wherein porosity is not an important property, in fact, it is undesirable. Hardness is important for fertilizers since hardness is related to the solubilization rate. Therefore, hardness is important for both explosive and fertilizer applications. Those skilled in this art know that, generally, hardening prills for the purposes of storage and/or transportation to their end-use destinations has been a problem in this art for sometime.

Hardness for ammonium nitrate prills is generally defined by crushing strength, which is tested by providing a constant load on the prill until the prill is crushed or cracked. The porosity is generally determined in terms of particle density as can be measured by mercury pyknometry.

The present invention advances the ammonium nitrate art with the application of polymers, organic, inorganic and/or combinations thereof to produce a hardened ammonium nitrate unknown to this art. The ammonium nitrate of the present invention may be used for any application where hardness is important. This is especially true for the explosive and the fertilizers arts for use as prills.

### SUMMARY OF THE INVENTION

According to the invention, there is provided an ammonium nitrate body, hardened by the addition of a functionally active polymer to an aqueous solution of ammonium nitrate, wherein said functionally active polymer is a polysuphonate. The said functionally active polymer may have an average molecular weight in the range of from about 200 to and through an upper range of 700,000. Preferably, the molecular weight is about 10,000 to and through an upper range of 200,000. Most preferably, the molecular weight is about 60,000 to and through about 150,000. Combinations of polymers are contemplated as useful and operative hereunder with polymers such as acryclic or methacrylic polymers, vinyl polymers and styrene polymers being preferred. An ammonium nitrate body formed in accordance with the invention utilising as the functionally active polymer sodium polystyrene sulfonate (SPSS) is especially preferred. The functional activity of the polymer provides for an association with the ammonium nitrate crystallites. Preferably the functionally active group is entered into the polymer as a radical. The functionally active group is added from about 0.0001 weight percent to about 10.0 weight percent of the ammonium nitrate, solubilized prior to the beginning of crystallization. Preferably, the functionally active group is added from about 0.0005 to 5.0 weight percent. Most preferably, the functionally active group is added from about 0.01 to about 1.0 weight percent.

Sulfonate salts, may be made as a combination of the polymer and functionally active group. Preferred examples of these salts are the monovalent salts, polystyrene sulfonate, polyvinyl sulfonate, polystyrene sulfonate copolymerized with maleic anhydride.

Optionally, a connecting group may be inserted between the polymer and the functionally active group. The connecting group may be a hydrocarbon of up to 8 carbons. While the present invention contemplates an upper limit of 8 carbons, preferably a linear chain, larger connecting groups may be operable, as well. The connecting group is a means to extend the distance between the polymer and functionally active group. Advantages from that extension may be realized by the addition of other kinds of connecting groups, but functionally the groups provide similar operability.

One of the present inventions more preferable embodiments may be presented by the following formula: 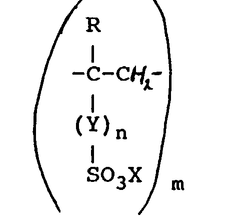 Wherein
- Y =: connecting group
- R =: hydrogen or methyl groups
- n =: 0 up to 8
- m =: integer from 3 to 3000
- X =: alkali metal, ammonium, hydrogen

Another advantage to the present invention is its film forming capability. Ammonium nitrate bodies that have been formed by the prior art, may be filmed with the present invention to form an AN prill core/shell spherical or other shape with enhanced hardness. The core may be comprised principally of AN or some combination of AN and some other common explosive and/or fertilizer known to those skilled in this art. Advantageously, the properties of the shell, which are derived from the polymer, may be varied to produce a shell with flexible density and/or hardness. Flexible density means that a range of different densities, either single and/or a plurality thereof, may be coated over a pre-existing or as formed prill. The density of the shell may be made to either match the core density and/or increase or decrease the density of the shell relative to the core. Density of the AN prill is an important property in the ultimate product use as an explosive. Density ranges of the shell may be from about .5 to about 1.7. The density of the shell may be additionally varied by multi-filming the AN prill to provide a shell of either several films of the same density or a shell of films with a range of varying densities. Thickness of the shell may be on the order of 0.1 up to several millimetres thick. The shell composition may be either the functionally active polymer or a combination of functionally active polymer and AN. The shell composition may be combined with either granules and/or prills. Additionally, there is no requirement that the polymer shell be continuous. As stated hereinabove, it is preferred that the shell be a combination of continuous and discontinuous film. Advantages to the addition of a polymer shell to the pre-existing AN core are realized by reconditioning an AN product to be able to withstand certain environmental factors which heretofore would have made the AN body commercially unusable. Certain environmental factors decrease the shelf-life of AN prill, such as humidity and the mechanical abrasions associated with the shelf and/or shipping environment. The present invention provides enhanced hardness to prolong the shelf-life.

The present invention may also be used to manufacture the core prill body. As those skilled in this art know, the AN prill body is made by internal crystallization of the AN during the formation of the prill. With the addition of the functionally active polymer, the prill should be able to maintain its porosity and increase its hardness throughout the prill body. This enhancement should provide the same shelf-life advantages disclosed hereinabove and additionally should provide the flexibility of density variation imparted by the polymer to the prill body. It is further found advantageous to mix the product of the present invention with diesel fuel oil to form an emulsion. The AN prills may be mixed with various ratios such as 30, 45, 60, and 75 percent of emulsion compositions comprising 80 weight percent aqueous AN liquor, 0.7 weight percent PIBSA - diethanolamine derivative, 0.7 weight percent sorbitan monooleate and 4.6 weight percent diesel fuel oil. The emulsions can be made under low shear mixing conditions and produced to an average size of about 5 microns.

Generally, the means of combining the present invention is to place a polymer salt and ammonium nitrate ("AN") in a carrier solvent such as water to make a mixture, heat the mixture to solubilization to form the combination, disperse the combination by some means and slowly cool over time to room temperature to form prills and/or granules.

### DETAILED DESCRIPTION OF EMBODIMENTS

The following is a further description of the present invention. The intent of this description is to further illustrate the invention and is not intended to limit the scope thereof.

### EXAMPLE 1

In Example 1, 950 grams of commercially available AN (ammonium nitrate) was added to 40 grams of water and 10 grams of an aqueous solution of sodium polystyrene sulfonate (SPSS) approximately 0.2 weight percent, with a molecular weight of about 75,000 (obtained from Aldrich Chemicals, Milwaukee WI) subsequently charged into a jacketed vessel and melted at 130 degrees centigrade forming a liquor. The liquor was sprayed on to 1 kilogram of freshly made hot (50 to 70 degrees C) AN prills over a period of 10 to 15 minutes in a thermally jacketed rotating pan. After completion of spraying the pan was heated by steam for 30 to 40 minutes in order to drive off moisture from the prills. The temperature decreased to room temperature over a 30 to 40 minute time period. The AN granules made from this method showed both porosity, enhanced hardness, and low friability.

### EXAMPLE 2

In Example 2, the same procedure was used as in Example 1, except that 0.3 weight percent SPSS was added to the AN solution. The resulting AN granules exhibited the same improvements.

### EXAMPLE 3

In Example 3, the same procedure was used as in Example 1, except that 1187.5 grams of AN, 50 grams of water, and 12.5 grams of SPSS with a molecular weight of about 130,000 (obtained from National Starch Chemical, New Jersey) was charged into the jacketed vessel.

### EXAMPLE 4

In Example 4, the same procedure was used as in Example 1, except 15 grams in 20% aqueous solution (0.3 weight percent) of polyvinyl sulfonate (obtained from Air Products, PA) with a molecular weight of approximately 70,000 was added to the mixture.

### EXAMPLE 5

Example 5, is an example of the use of the present invention in the manufacture of prill. A hot liquor containing 95 weight percent AN, 1 weight percent SPSS (20 % aqueous solution) and 4 weight percent water may be made in a tank of 200 Kg capacity at 140 degrees C. The hot liquor may be pumped to an overhead tank of a prilling tower with a height of 8 meters and then may be sprayed through a vibrated sieved plate to produce a shower of droplets with an average diameter of 1.7 mm. The droplets so formed will fall through a moving air stream and solidify during flight. The solidified droplet is the prill.

The following methods were used to determine the properties of the present invention.

Particle density of the granules/prill was measured by mercury pyknometry measured in grams per cubic centimetre. This technique provides semi-quantitative results of the voids present. It is a good technique when comparisons are made on a sample to sample basis. Samples are placed in a holder and mercury is pumped into the holder with the sample. The resulting volume differential between mercury with and without sample is used to determine the sample density.

Crushing strength, which is a measure of hardness, is determined by placing a constant load on a sample until the sample either cracks or is crushed and is measured in pounds. The data is taken on a TSDC Chatillon obtained from Digital Measurement Metrology Inc. in Canada.

Friability is a measure of the abrasion resistance of the ammonium nitrate body which is dependent upon the compactness of the crystal structure at the surface of the body. Friability is determined by the percent fines (powder which comes off the body) generated after the body is subjected to an air cyclone. This is a standard method, known to those skilled in the art and gives a measure of surface hardness.

The Table exhibits results from tests performed on the present invention.

| Example | Crushing Strength | Friability | Particle Density |
|---|---|---|---|
| 1 | 5.7 - 6.8 | 0.5 - 3.5 | 1.17 |
| 3 | 6 - 6.72 | 0.5 - 3.5 | 1.18 |
| 4 | 3.8 | 5 - 8 | |

| Comparative Example | | | |
|---|---|---|---|
| 1A | 2.1 | 18 | 1.23 |
| 3A | 2 - 3 | -- | 1.46 |
| 4A | 2 - 3 | -- | 1.46 |

The Table indicates that hardness or crushing strength is increased for the samples treated with the functionally active polymers since the samples were able to withstand a larger crushing weight. The increase in hardness is from two to three times the hardness of the comparative examples. Note that the density of the inventive samples is less than that of the comparative samples by a significant amount, indicating that the inventive samples do not derive their hardness from density considerations.

## Claims

1. An ammonium nitrate body, hardened by the addition of a functionally active polymer to an aqueous solution of ammonium nitrate, wherein said functionally active polymer is a polysulphonate.

2. An ammonium nitrate body as claimed in Claim 1 wherein said polysulphonate polymer is selected from acrylic or methacrylic polymers, vinyl polymers and styrene polymers.

3. An ammonium nitrate body as claimed in Claim 1 wherein said polymer has the formula: 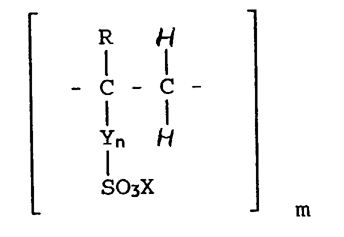 wherein
Y is a connecting group
R is hydrogen or a methyl group
m is an integer from 3 to 3000
n is an integer from 0 to 8, and
X is an alkali metal, ammonium or hydrogen.

4. An ammonium nitrate body as claimed in Claim 3 wherein Y is a hydrocarbon group having up to 8 carbon atoms.

5. An ammonium nitrate body as claimed in Claim 1 wherein the functionally active polymer is sodium polystyrene sulphonate (SPSS).

6. An ammonium nitrate body as claimed in Claim 1 wherein said functionally active polymer has an average molecular weight of from 200 to 700,000.

7. An ammonium nitrate body as claimed in Claim 1 wherein said functionally active polymer has an average molecular weight of from 10,000 to 200,000.

8. An ammonium nitrate body as claimed in Claim 1 wherein said functionally active polymer has an average molecular weight of from 60,000 to 150,000.

9. An ammonium nitrate body comprised of a first, outer layer comprising said functionally active polymer in combination with ammonium nitrate as claimed in Claim 1, and a second, inner layer comprising ammonium nitrate wherein said combination has a core/shell structure.

10. An ammonium nitrate body as claimed in Claim 9 wherein said second, inner layer is a pre-existing ammonium nitrate body reconditioned by addition of said first layer.

11. An ammonium nitrate body as claimed in Claim 10 wherein said second, inner layer is an ammonium nitrate prill.

12. An emulsion comprising an ammonium nitrate body as claimed in Claim 1 and diesel fuel.

13. An explosive comprising an ammonium nitrate body as claimed in Claim 1.

14. A method for the production of an ammonium nitrate body as claimed in Claim 1 comprising preparing a heated aqueous solution of ammonium nitrate and cooling said solution to produce ammonium nitrate bodies, characterized in that a polysulphonate is added to said solution prior to cooling of said solution.

15. A method as claimed in Claim 14 wherein said polymer has the formula: 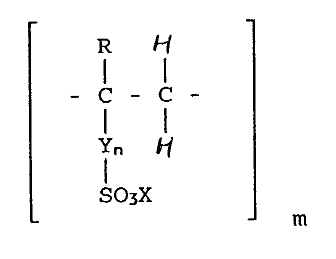 wherein
Y is a connecting group
R is hydrogen or a methyl group
m is an integer from 3 to 3000
n is an integer from 0 to 8, and
X is an alkali metal, ammonium or hydrogen.

16. A method as claimed in Claim 15 wherein Y is a hydrocarbon group having up to 8 carbon atoms.

17. A method as claimed in Claim 14 wherein the functionally active polymer is sodium polystyrene sulphonate (SPSS).

18. A method as claimed in Claim 14 wherein said polysulphonate containing solution of ammonium nitrate is cooled on a pre-existing ammonium nitrate prill.

## Patentansprüche

1. Ammoniumnitratkörper, durch die Zugabe eines funktionell aktiven Polymers zu einer wäßrigen Ammoniumnitrat-Lösung gehärtet, wobei das funktionell aktive Polymer ein Polysulfonat ist.

2. Ammoniumnitratkörper nach Anspruch 1, wobei das Polysulfonatpolymer aus Acryl- oder Methacrylpolymeren, Vinylpolymeren und Styrolpolymeren ausgewählt ist.

3. Ammoniumnitratkörper nach Anspruch 1, wobei das Polymer die Formel: 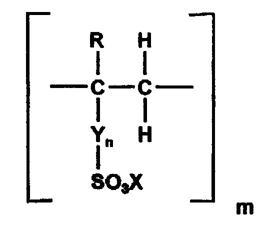 aufweist,
wobei
Y eine verbindende Gruppe darstellt
R ein Wasserstoffatom oder eine Methylgruppe darstellt
m eine ganze Zahl von 3 bis 3000 ist
n eine ganze Zahl von 0 bis 8 ist, und
X ein Alkalimetall, eine Ammoniumgruppe oder ein Wasserstoffatom darstellt.

4. Ammoniumnitratkörper nach Anspruch 3, wobei Y eine Kohlenwasserstoffgruppe mit bis zu 8 Kohlenstoffatomen darstellt.

5. Ammoniumnitratkörper nach Anspruch 1, wobei das funktionell aktive Polymer Natriumpolystyrolsulfonat (SPSS) ist.

6. Ammoniumnitratkörper nach Anspruch 1, wobei das funktionell aktive Polymer ein durchschnittliches Molekulargewicht von 200 bis 700 000 aufweist.

7. Ammoniumnitratkörper nach Anspruch 1, wobei das funktionell aktive Polymer ein durchschnittliches Molekulargewicht von 10 000 bis 200 000 aufweist.

8. Ammoniumnitratkörper nach Anspruch 1, wobei das funktionell aktive Polymer ein durchschnittliches Molekulargewicht von 60 000 bis 150 000 aufweist.

9. Ammoniumnitratkörper, umfassend eine erste, äußere Schicht, die das funktionell aktive Polymer in Kombination mit Ammoniumnitrat wie in Anspruch 1 beansprucht enthält, und eine zweite, innere Schicht, die Ammoniumnitrat enthält, wobei die Kombination eine Kern/Mantel-Struktur aufweist.

10. Ammoniumnitratkörper nach Anspruch 9, wobei die zweite, innere Schicht ein zuvor vorhandener Ammoniumnitratkörper ist, der durch die Addition der ersten Schicht rekonditioniert ist.

11. Ammoniumnitratkörper nach Anspruch 10, wobei die zweite, innere Schicht ein Ammoniumnitratprill ist.

12. Emulsion, enthaltend einen Ammoniumnitratkörper, wie in Anspruch 1 beansprucht, und Dieselkraftstoff.

13. Explosivstoff, enthaltend einen Ammoniumnitratkörper wie in Anspruch 1 beansprucht.

14. Verfahren zur Herstellung eines Ammoniumnitratkörpers nach Anspruch 1, umfassend die Herstellung einer erwärmten wäßrigen Ammoniumnitratlösung und die Abkühlung der Lösung zur Herstellung von Ammoniumnitratkörpern, dadurch gekennzeichnet, daß ein Polysulfonat zu der Lösung vor dem Abkühlen der Lösung gegeben wird.

15. Verfahren nach Anspruch 14, wobei das Polymer die Formel: 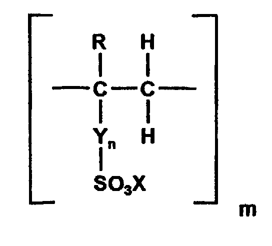 aufweist,
wobei
Y eine verbindende Gruppe darstellt
R ein Wasserstoffatom oder eine Methylgruppe darstellt
m eine ganze Zahl von 3 bis 3000 ist
n eine ganze Zahl von 0 bis 8 ist, und
X ein Alkalimetall, eine Ammoniumgruppe oder ein Wasserstoffatom darstellt.

16. Verfahren nach Anspruch 15, wobei Y eine Kohlenwasserstoffgruppe mit bis zu 8 Kohlenstoffatomen ist.

17. Verfahren nach Anspruch 14, wobei das funktionell aktive Polymer ein Natriumpolystyrolsulfonat (SPSS) ist.

18. Verfahren nach Anspruch 14, wobei die polysulfonathaltige Ammoniumnitratlösung auf einem zuvor vorhandenem Ammoniumnitratprill abgekühlt wird.

## Revendications

1. Corps de nitrate d'ammonium durci par addition d'un polymère fonctionnellement actif à une solution aqueuse de nitrate d'ammonium, dans lequel ce polymère fonctionnellement actif est un polysulfonate.

2. Corps de nitrate d'ammonium selon la revendication 1, dans lequel ce polysulfonate est choisi parmi des polymères acryliques ou méthacryliques, des polymères vinyliques et des polymères styréniques.

3. Corps de nitrate d'ammonium selon la revendication 1, dans lequel ce polymère répond à la formule : 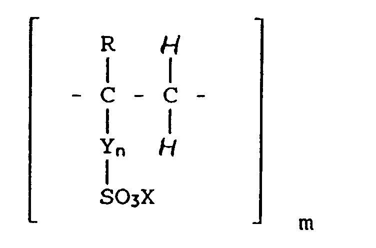 dans laquelle
Y est un groupe de liaison,
R est un atome d'hydrogène ou un groupe méthyle,
m est un entier de 3 à 3000,
n est un entier de 0 à 8, et
X est un métal alcalin, l'ammonium ou l'hydrogène.

4. Corps de nitrate d'ammonium selon la revendication 3, dans lequel Y est un groupe hydrocarboné ayant jusqu'à 8 atomes de carbone.

5. Corps de nitrate d'ammonium selon la revendication 1, dans lequel le polymère fonctionnellement actif est un polystyrène sulfonate de sodium (SPSS).

6. Corps de nitrate d'ammonium selon la revendication 1, dans lequel ce polymère fonctionnellement actif a un poids moléculaire moyen de 200 à 700 000.

7. Corps de nitrate d'ammonium selon la revendication 1, dans lequel ce polymère fonctionnellement actif a un poids moléculaire moyen de 10 000 à 200 000.

8. Corps de nitrate d'ammonium selon la revendication 1, dans lequel ce polymère fonctionnellement actif a un poids moléculaire moyen de 60 000 à 150 000.

9. Corps de nitrate d'ammonium constitué d'une première couche externe comprenant ce polymère fonctionnellement actif en combinaison avec un nitrate d'ammonium selon la revendication 1, et une seconde couche, interne, comprenant du nitrate d'ammonium, dans lequel cette combinaison a une structure noyau/enveloppe.

10. Corps de nitrate d'ammonium selon la revendication 9, dans lequel cette seconde couche, interne, est un corps de nitrate d'ammonium préexistant reconditionné par addition de cette première couche.

11. Corps de nitrate d'ammonium selon la revendication 10, dans lequel cette seconde couche, interne, est un granulé de nitrate d'ammonium.

12. Emulsion comprenant un corps de nitrate d'ammonium selon la revendication 1 et un combustible diesel.

13. Explosif comprenant un corps de nitrate d'ammonium selon la revendication 1.

14. Procédé pour la production d'un corps de nitrate d'ammonium selon la revendication 1, comprenant le fait de préparer une solution aqueuse chauffée de nitrate d'ammonium et de refroidir cette solution pour produire des corps de nitrate d'ammonium, caractérisé en ce qu'un polysulfonate est ajouté à cette solution avant de refroidir cette solution.

15. Procédé selon la revendication 1, dans lequel ce polymère répond à la formule : 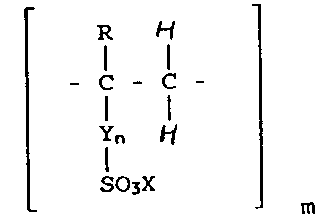 dans laquelle
Y est un groupe de liaison,
R est un atome d'hydrogène ou un groupe méthyle,
m est un entier de 3 à 3000,
n est un entier de 0 à 8, et
X est un métal alcalin, l'ammonium ou l'hydrogène.

16. Procédé selon la revendication 15, dans lequel Y est un groupe hydrocarboné ayant jusqu'à 8 atomes de carbone.

17. Procédé selon la revendication 14, dans lequel le polymère fonctionnellement actif est un polystyrène sulfonate de sodium (SPSS).

18. Procédé selon la revendication 14, dans lequel cette solution de nitrate d'ammonium contenant un polysulfonate est refroidie sur un granulé de nitrate d'ammonium préexistant.
